# EUROPÄISCHE PATENTSCHRIFT

(11) **EP 1 877 294 B1**
(45) Veröffentlichungstag und Bekanntmachung des Hinweises auf die Patenterteilung: **04.08.2010**
(21) Anmeldenummer: 06763071.5
(22) Anmeldetag: 28.04.2006
(51) Int. Cl.: B62D 7/14

(54) **LENKVORRICHTUNG, INSBESONDERE FÜR EINE HINTERACHSLENKUNG**
STEERING DEVICE, IN PARTICULAR FOR A REAR AXLE STEERING SYSTEM
DISPOSITIF DE DIRECTION, CONÇU EN PARTICULIER POUR UNE DIRECTION DE ROUE ARRIERE

(30) Priorität: 02.05.2005 DE 102005020420; 28.04.2006 DE 102006020487
(43) Veröffentlichungstag der Anmeldung: 16.01.2008
(73) Patentinhaber: Continental Teves AG & Co. oHG, 60488 Frankfurt am Main (DE)
(72) Erfinder: SCHIEL, Lothar, 65719 Hofheim (DE); NEUMANN, Ulrich, 64360 Rossdorf (DE)
(86) Internationale Anmeldenummer: PCT/EP2006/061932
(87) Internationale Veröffentlichungsnummer: WO 2006/117344

(56) Entgegenhaltungen:
- DE-A1- 2 948 181
- DE-A1- 3 736 229
- DE-A1- 10 011 142
- DE-A1- 10 064 585
- DE-U1- 20 313 103
- US-A- 4 695 069
- PATENT ABSTRACTS OF JAPAN Bd. 2000, Nr. 22, 9. März 2001 (2001-03-09) -& JP 2001 130427 A (KOYO SEIKO CO LTD), 15. Mai 2001 (2001-05-15)
- PATENT ABSTRACTS OF JAPAN Bd. 012, Nr. 126 (M-687), 19. April 1988 (1988-04-19) -& JP 62 251277 A (MITSUBISHI ELECTRIC CORP), 2. November 1987 (1987-11-02)

## Beschreibung

Die Erfindung betrifft eine Lenkvorrichtung zum Einstellen eines Radeinschlagswinkels eines Rades eines Kraftfahrzeugs, insbesondere eines Hinterrades.

Bekannte Lenkvorrichtungen für eine Hinterachslenkung weisen ähnlich wie konventionelle Vorderachslenkungssysteme eine Spurstange auf, die das rechte und linke Hinterrad miteinander verbindet. Das Einstellen eines Radeinschlagswinkels erfolgt dabei durch eine elektromechanisch oder elektrohydraulisch gesteuerte Verschiebung der Spurstange. Derartige Lenkvorrichtungen erfordern jedoch einen erheblichen konstruktiven Aufwand.

Ferner sind Lenkvorrichtungen bekannt, wie z.B. nach der DE 10011142, bei denen karosserieseitige Aufhängungspunkte von Radführungsgliedern beweglich gestaltet sind. Eine Bewegung, die zur Einstellung eines Radeinschlagswinkels führt, wird dabei durch einen elektromechanischen oder elektrohydraulischen Antrieb bewirkt. Insbesondere elektrohydraulische Antriebe haben dabei den Nachteil, dass die Antriebseinheiten einen großen Einbauraum erfordern, sehr schwer sind und mühevoll geräuschisoliert werden müssen.

Ferner besteht das Problem, dass die Kopplung der Antriebseinheiten und der Verstellmechanismen in der Regel erhebliche konstruktive Abweichungen von der herkömmlichen Radaufhängung des Fahrzeugs erforderlich macht, wodurch die Ausrüstung eines Fahrzeugs mit einer Hinterachslenkung mit einem sehr hohen Aufwand verbunden ist. Zudem erhöht die mit dem Radführungsglied gekoppelte Antriebseinheit in der Regel die bewegte Masse der Radaufhängung, so dass sich die Kinematik der Radaufhängung verändert bzw. der Effekt der zusätzlichen Masse durch konstruktive Anpassungen kompensiert werden muss.

Es ist daher eine Aufgabe der vorliegenden Erfindung, eine Lenkvorrichtung zu schaffen, bei der möglichst geringe Änderungen einer Radaufhängung nicht lenkbarer Fahrzeugräder erforderlich sind.

Erfindungsgemäß wird diese Aufgabe durch eine Lenkvorrichtung mit den Merkmalen des Anspruchs 1 gelöst.

Demgemäß wird eine Lenkvorrichtung zum Einstellen eines Radeinschlagswinkels eines Rades eines Kraftfahrzeugs, insbesondere eines Hinterrades, geschaffen, die wenigstens ein Radführungsglied umfasst, über das ein Radträger des Rades mit einem Fahrzeugaufbau verbunden ist, wobei der Radträger um eine im Wesentlichen parallel zur Radebene verlaufende Drehachse schwenkbar ist und das Radführungsglied beabstandet von der Drehachse an einem Radträger angelenkt ist. Das Radführungsglied ist mittels eines Elektromotors in seiner Länge verstellbar, wobei ein an dem Radführungsglied angeordnetes Getriebe aufgrund einer Rotation einer Antriebswelle des Elektromotors eine Längenänderung des Radführungsgliedes bewirkt, die zu einer Veränderung des Radeinschlagswinkels des Rades führt. Der Elektromotor ist an dem Fahrzeugaufbau befestigt und eine Antriebswelle des Elektromotors ist über ein Übertragungselement mit dem Getriebe verbunden.

Hierdurch wird eine Lenkvorrichtung geschaffen, bei der die konstruktiven Abweichungen zu einer Radaufhängung starrer Räder gering sind.

Der Elektromotor ist bei der erfindungsgemäßen Lenkvorrichtung unmittelbar an dem Fahrzeugaufbau befestigt. Dies entspricht einer "massenmäßigen" Entkopplung des Elektromotors von dem in seiner Länge verstellbaren Radführungsglied und hat den Vorteil, dass die bewegte Masse des längenveränderlichen Radführungsgliedes im Wesentlichen der Masse des entsprechenden starren Radführungsgliedes der konventionellen Radaufhängung entspricht. Auf diese Weise werden die bewegten Massen der Radaufhängung und damit die Kinematik der Radaufhängung im Wesentlichen nicht verändert. Eine mit der erfindungsgemäßen Lenkvorrichtung ausgestattete Radaufhängung zeigt somit im Hinblick auf das Fahrverhalten keine spürbaren Unterschiede gegenüber der entsprechenden konventionellen Radaufhängung mit starrem Radführungsglied, so dass neben der Ersetzung des starren Radführungsgliedes durch das längenveränderliche keine weitergehenden Anpassungen erforderlich sind. Darüber hinaus eignet sich die Lenkvorrichtung für einen Einsatz bei angetriebenen und nichtangetriebenen Hinterachsen.

Die Drehachse der erreichbaren Schwenkbewegung der Räder ist in der Regel insbesondere aufgrund des Sturzes der Räder nicht vollständig parallel zu der Radebene. Die Abweichung entspricht dabei dem Sturzwinkel der Räder.

Bei einer vorteilhaften Ausführungsform der Erfindung ist es vorgesehen, dass der Elektromotor im Bereich eines Aufhängungspunktes des in seiner Länge verstellbaren Radführungsgliedes an dem Fahrzeugaufbau befestigt ist.

Hierdurch wird erreicht, dass der Massenschwerpunkt des aus dem Elektromotor und dem Getriebe bestehenden Antriebs sehr nahe an dem Aufhängungspunkt des längenverstellbaren Radführungsgliedes liegt, so dass die kinematischen Eigenschaften der Radaufhängung im Wesentlichen denen der entsprechenden Radaufhängung mit längenfestem Radführungsglied entsprechen.

Eine zweckmäßige Ausgestaltung der Erfindung beinhaltet, dass es sich bei dem Übertragungselement um ein Übertragungsgetriebe handelt, das antriebsmäßig mit der Antriebswelle des Elektromotors verbunden ist.

Eine bevorzugten Ausführungsform der Erfindung sieht vor, dass der Elektromotor beabstandet von dem in seiner Länge verstellbaren Radführungsglied angeordnet ist.

Hierdurch wird eine noch bessere Entkopplung des Elektromotors von dem längenverstellbaren Radführungslied erreicht.

Bei einer ebenfalls bevorzugten Ausführungsform der Erfindung ist es vorgesehen, dass das Übertragungselement als eine flexible Antriebswelle ausgeführt ist. Unter einer flexiblen Antriebswelle wird dabei insbesondere eine biegsame Antriebswelle verstanden.

Hierdurch lässt sich neben einer besonders guten Entkopplung des Elektromotors von dem längenverstellbaren Radführungsglied auch eine hohe Flexibilität im Hinblick auf den Einbauort des Elektromotors erreichen.

Eine besonders vorteilhafte Ausführungsform der Erfindung zeichnet sich dadurch aus, dass es sich bei der flexiblen Antriebswelle um einen Bremsschlauch handelt.

Es hat sich gezeigt, dass Bremsschläuche dazu in der Lage sind, die für den Antrieb erforderlichen Drehmomente zu übertragen. Darüber hinaus haben sich Bremsschläuche im Hinblick auf Robustheit gegenüber äußeren Einflüssen und im Hinblick auf lange Haltbarkeit bei einem Einsatz im Bereich der Radaufhängung am Unterboden eines Fahrzeug bereits bestens bewährt. Da Bremsschläuche in großen Mengen hergestellt werden, wird durch ihren Einsatz als flexible Antriebswelle die Wertschöpfung optimiert.

Eine weitere vorteilhafte Ausführungsform der Erfindung ist dadurch gekennzeichnet, dass es sich bei dem Übertragungselement um einen Zahnriemen oder einen Keilriemen handelt.

Auch bei dieser Ausführungsform besteht eine wirkungsvolle Entkopplung zwischen dem Elektromotor und dem Verstellmechanismus des längenveränderlichen Radführungsgliedes.

Weiterhin beinhaltet eine bevorzugten Ausgestaltung der Erfindung, dass der Elektromotor beabstandet von dem in seiner Länge verstellbaren Radführungsglied angeordnet ist.

Bei einer vorteilhaften Ausführungsform der Erfindung ist es vorgesehen, dass das Getriebe ein Schneckengetriebe umfasst.

Weiterhin sieht eine zweckmäßige Ausgestaltung der Erfindung vor, dass mittels des Übertragungselements eine Schnecke des Schneckengetriebes antreibbar ist.

Eine vorteilhafte Weiterbildung der Erfindung zeichnet sich dadurch aus, dass das Schneckengetriebe selbsthemmend ausgeführt ist.

Eine Selbsthemmung ist bei einem Schneckengetriebe besonders einfach realisierbar. Sie hat den Vorteil, dass die Lenkvorrichtung bei unbestromtem Elektromotor arretiert ist. Insbesondere eine mittlere Position, d.h. ein Radeinschlagswinkel von null, kann hierdurch mit ausgeschaltetem Elektromotor realisiert werden, was im Hinblich auf den Energieverbrauch der Lenkvorrichtung besonders günstig ist. Zudem erfolgt eine Arretierung bei einem Energieausfall, was im Hinblick auf die Fahrzeugsicherheit besonders vorteilhaft ist.

Eine gleichfalls vorteilhafte Ausführungsform der Erfindung sieht vor, dass das Schneckengetriebe am fahrzeugaufbauseitigen Ende des Radführungsgliedes angeordnet ist.

Eine zweckmäßige Weiterbildung der Erfindung ist darüber hinaus dadurch gekennzeichnet, dass das Radführungsglied einen Gewindespindelabschnitt und einen Mutterabschnitt aufweist, wobei der Gewindespindelabschnitt in den Mutterabschnitt eingreift und eine Drehung des Gewindespindelabschnitts eine Längenveränderung des Radführungsgliedes bewirkt.

In einer vorteilhaften Ausführungsform der Erfindung ist es zudem vorgesehen, dass ein Schneckenrad des Schneckengetriebes mit dem Gewindespindelabschnitt des Radführungsgliedes antriebsmäßig verbunden ist.

Darüber hinaus ist im Rahmen der Erfindung ein Kraftfahrzeug, umfassend ein linkes und ein rechtes Hinterrad, vorgesehen. Das Kraftfahrzeug ist dadurch gekennzeichnet, dass jedem Hinterrad eine Lenkvorrichtung der zuvor dargestellten Art zugeordnet ist, wobei jeweils ein Elektromotor zur Verstellung der Länge der Radführungsglieder vorgesehen ist, der über ein Übertragungselement mit dem Getriebe verbunden ist.

Hierbei erfolgt die Verstellung der Längen der Radführungsglieder und damit der Radeinschlagswinkel des rechten und linken Hinterrades unabhängig voneinander. Auf diese Weise können bei Bedarf insbesondere verschiedene Radeinschlagswinkel an den Hinterrädern eingestellt werden.

Ferner ist ein Kraftfahrzeug vorgesehen, bei dem jedem Hinterrad eine Lenkvorrichtung der zuvor dargestellten Art zugeordnet ist, wobei genau ein Elektromotor zur Verstellung der Länge der Radführungsglieder vorgesehen ist, der über wenigstens ein Übertragungselement mit den Getrieben der Radführungsglieder verbunden ist.

Bei dieser Ausgestaltung der Erfindung ist lediglich ein einziger Elektromotor erforderlich, mit dem die Längen der längenverstellbaren Radführungsglieder verstellt werden. Hierdurch werden insbesondere das Gewicht und der Einbauraumbedarf der gesamten Lenkvorrichtung reduziert.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt:
- Fig. 1: eine Draufsicht auf eine Radaufhängung mit einer er- findungsgemäßen Lenkvorrichtung in einer ersten Aus- führungsform,
- Fig. 2: eine Ansicht der erfindungsgemäßen Lenkvorrichtung in der ersten Ausführungsform,
- Fig. 3: eine Ansicht auf eine Radaufhängung mit einer erfin- dungsgemäßen Lenkvorrichtung in einer zweiten Ausfüh- rungsform,
- Fig. 4: eine Ansicht der erfindungsgemäßen Lenkvorrichtung in der zweiten Ausführungsform,
- Fig. 5: eine Ansicht auf eine Radaufhängung mit einer erfin- dungsgemäßen Lenkvorrichtung in einer dritten Ausfüh- rungsform,
- Fig. 6: eine Ansicht der erfindungsgemäßen Lenkvorrichtung in der dritten Ausführungsform und
- Fig. 7: eine Ansicht auf eine Radaufhängung mit einer erfin- dungsgemäßen Lenkvorrichtung in einer vierten Ausfüh- rungsform.

Hinterräder eines Kraftfahrzeugs sind üblicherweise über eine Einzelradaufhängung mit dem Fahrzeugaufbau verbunden. Diese umfasst in der Regel mehrere Radführungsglieder, die aufbauseitig an einem Hinterachshilfsrahmen und radseitig an einem Radträger angelenkt sind. Der Hinterachshilfsrahmen wird fest mit der Fahrzeugkarosserie verbunden und bildet mit ihr zusammen den Fahrzeugaufbau. Üblicherweise umfassen dem Fachmann bekannte Radaufhängungen ein Radführungsglied, das insbesondere die Spurhaltung eines Hinterrades bewirkt. Es handelt sich dabei um Querlenker bzw. Spurstangen, die beabstandet von einer Schwenkachse einer Lenkbewegung in Richtung Vor- oder Nachspur an dem Radträger angelenkt sind und direkt oder über weitere Radführungsglieder mit dem Fahrzeugaufbau und insbesondere mit dem Hinterachshilfsrahmen verbunden sind.

Die Aufhängungspunkte der Radführungsglieder sind als Elastomerlager ausgeführt. Aufgrund der elastischen Aufhängung lassen sich die Hinterräder dabei durch das Einwirken von Kräften, die beispielsweise beim Einfedern eines Rades entstehen, um Winkel in einer Größenordnung von wenigstens bis zu 2° oder 3° in Richtung Vorspur und Nachspur verschwenken. Es ist insbesondere bereits bekannt, die Radaufhängung so auszugestalten, dass diese so genannten elastokinematischen Lenkbewegungen das Fahrzeug bei Kurvenfahrten stabilisieren.

Hiervon ausgehend sieht die Erfindung vor, den starren Querlenker, der die Spurführung des Rades bewirkt, durch ein in seiner Länge verstellbares Radführungsglied zu ersetzen. Eine Längenveränderung des Radführungsgliedes führt dabei zu einer Veränderung des Radeinschlagswinkels des über den Querlenker mit dem Fahrzeugaufbau verbundenen Hinterrades. Eine derartige Lenkvorrichtung ist dabei sowohl bei angetriebenen als auch bei nicht angetriebenen Hinterachse einsetzbar.

Ohne weitergehende Veränderungen der Radaufhängung lassen sich dabei Radeinschlagswinkel in der zuvor genannten Größenordnung realisieren, die zur Beeinflussung des Fahrverhaltens bereits ausreichend sind. Insbesondere kann durch gezielte Lenkbewegungen mit derartigen Radeinschlagswinkeln eine Erhöhung der Agilität des Fahrzeugs erreicht werden, und das Fahrzeug kann in kritischen Fahrsituationen wirkungsvoll stabilisiert werden.

Grundsätzlich kann es jedoch auch vorgesehen sein, die Radaufhängung so zu verändern, dass durch eine Längenveränderung eines Radführungsgliedes größere Radeinschlagswinkel realisierbar sind, die auch beim Rangieren des Fahrzeugs einen spürbaren Einfluss haben und durch welche die Wendigkeit des Fahrzeugs beim Rangieren verbessert wird.

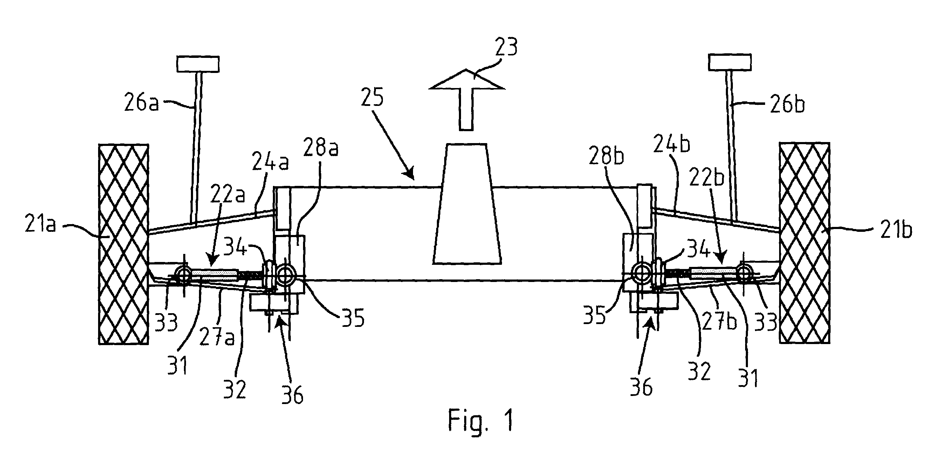

In Figur 1 ist in schematischer Darstellung eine Radaufhängung von Hinterrädern 21a, 21b eines Kraftfahrzeugs in der oben genannten Art dargestellt, in die eine Lenkvorrichtung mit längenverstellbaren Radführungsgliedern 22a, 22b integriert ist. Die Darstellung zeigt dabei eine Aufsicht von oben und der Pfeil 23 zeigt in Fahrzeuglängsrichtung nach vorne.

Die beispielhaft dargestellte Radaufhängung umfasst auf jeder Seite einen ersten Querlenker 24a, 24b, der an einem Hinterachshilfsrahmen 25 angelenkt ist sowie an einem Rad 21a, 21b bzw. einem in der Figur nicht dargestellten zugehörigen Radträger. Die Querlenker 24a, 24b werden jeweils mittels eines Längslenkers 26a, 26b stabilisiert, der einerseits an dem Querlenker 24a, 24b und andererseits an dem Fahrzeugaufbau angelenkt ist. Heckseitig weist die Radaufhängung auf jeder Seite einen unteren Querlenker 27a, 27b sowie einen oberen Querlenker auf. Die oberen Querlenker sind als längenveränderliche Radführungsglieder 22a, 22b ausgestaltet. Die Längenverstellung der Radführungsglieder 22a, 22b erfolgt bei der in Figur 1 dargestellten Ausführungsform der Erfindung mittels jeweils eines dem Radführungsglied 22a, 22b zugeordneten Elektromotor 28a, 28b.

Eine durch eine Ansteuerung des Elektromotors 28a, 28b bewirkte Längenveränderung eines Radführungsgliedes 22a, 22b führt bei der schematisch dargestellten Radaufhängung zu einem Radeinschlagswinkel an dem entsprechenden Rad.

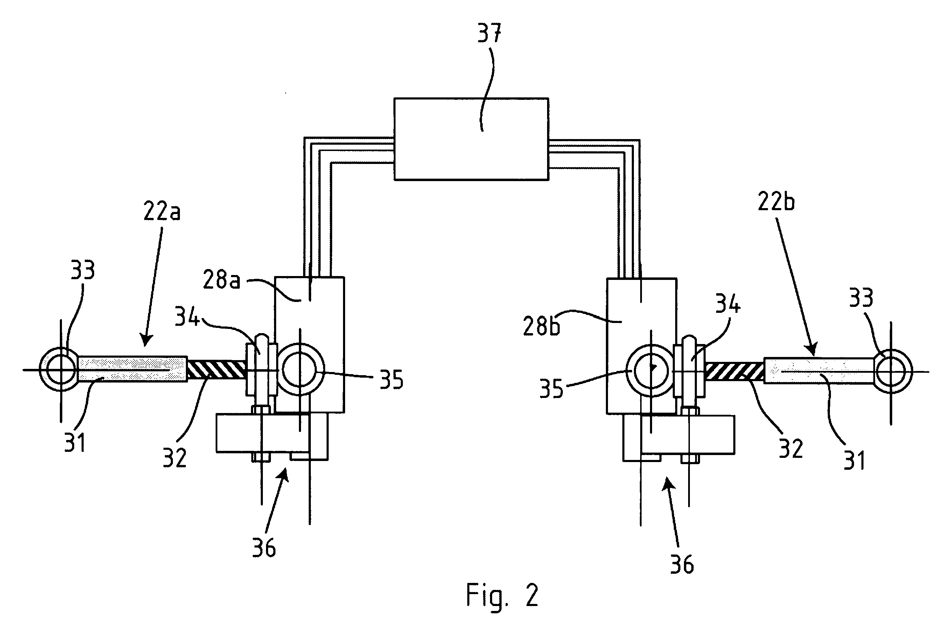

Die Lenkvorrichtung mit den längenveränderlichen Radführungsgliedern 22a, 22b und den zur Verstellung ihrer Länge vorgesehenen Elektromotoren 28a, 28b ist zudem in Figur 2 in einer schematischen Ansicht dargestellt.

In der in den Figuren dargestellten bevorzugten Ausgestaltung sind die längenveränderlichen Radführungsglieder 22a, 22b als Spindel-Mutter-Einheiten ausgeführt, die jeweils über einen Mutterabschnitt 31 und eine Gewindespindel 32 verfügen. Der Mutterabschnitt 31 ist als eine hohlzylindrische Stange ausgeführt, die vorzugsweise den radträgerseitigen Abschnitt des Radführungsgliedes 22a, 22b bildet und über ein Gelenk an dem Radträger angelenkt ist, wobei ein endseitig an dem Mutterabschnitt 31 befestigtes Auge 33 beispielsweise den Lagermittelsteg bildet. Das Gelenk ist so ausgeführt, dass eine Rotation des Mutterabschnitts 31 um seine Längsachse verhindert wird. Zumindest abschnittsweise ist die Innenwand des Mutterabschnitts 31 mit einem Gewinde versehen, in das die Gewindespindel 32 eingreift. Aufgrund einer Drehung der Gewindespindel 32 wird das Radführungsglied 22a, 22b somit verlängert bzw. verkürzt.

Der Antrieb der Gewindespindel erfolgt vorzugsweise durch ein Schneckengetriebe 34, das in einem Gehäuse untergebracht ist, das über ein Gelenk mit dem Hinterachshilfsrahmen 25 verbunden ist, wobei beispielsweise ein Auge 35 an dem Gehäuse befestigt sein kann, das den Lagermittelsteg bildet. Vorzugsweise umfasst das Schneckengetriebe 34 eine durch den zu dem Radführungslied 22a, 22b gehörenden Elektromotor 28a, 28b über ein Übertragungselement angetriebene Schnecke, die in ein mit der Gewindespindel 32 verbundenes Schneckenrad eingreift.

Das Schneckengetriebe 34 ist bei der Erfindung selbsthemmend ausgeführt, so dass eine Drehung des Schneckenrades aufgrund von radseitig einwirkenden Einflüssen nicht möglich ist. Hierdurch wird auf einfache Weise erreicht, dass die Länge der Radführungsglieder 22a, 22b bei unbestromtem zugehörigen Elektromotor 28a, 28b nicht durch radseitige Einflüsse verändert werden kann. Eine derartige Arretierung erlaubt es somit, den Motor bei nicht aktiver Hinterradlenkung ausgeschaltet bzw. unbestromt zu halten. Ferner ist sichergestellt, dass bei einem Energieausfall aufgrund eines Defekts eine Arretierung erfolgt.

Bei der in den Figuren 1 und 2 dargestellten Ausführungsform der Erfindung sind die Elektromotoren 28a, 28b im Bereich der Aufhängungspunkte der längenverstellbaren Radführungsglieder an dem Fahrzeugaufbau bzw. den Hinterachshilfsrahmen 25 befestigt. Die Elektromotoren 28a, 28b sind dabei so angeordnet, dass der Massenschwerpunkt des aus dem Elektromotor 28a, 28b und dem Schneckengetriebe 34 bestehenden Antriebs eines längenverstellbaren Radführungsgliedes 22a, 22b möglichst nahe an dessen Aufhängungspunkt liegt.

Der Antrieb der Schnecke des Schneckengetriebes 34 erfolgt bei dieser Ausführungsform vorzugsweise durch ein Übertragungsgetriebe 36. Die Antriebswelle des entsprechenden Elektromotors 28a, 28b ist dabei vorzugsweise antriebsmäßig mit einem Zahnrad des Übertragungsgetriebes 36 verbunden, das in ein weiteres Zahnrad eingreift, welches die Schnecke des Schneckengetriebes 34 antreibt. Gleichfalls kann das Übertragungsgetriebe 36 auch als Riemengetriebe ausgeführt werden. Das Übertragungsgetriebe 38 ist vorzugsweise so angeordnet, dass die Drehachsen der Antriebselemente senkrecht zu der Längsausdehnung des zugehörigen Radführungsgliedes 22a, 22b verlaufen.

Durch die zuvor beschriebene Anordnung der Elektromotoren 28a, 28b an den Aufhängungspunkten der längenverstellbaren Radführungsglieder 22a, 22b wird eine "massenmäßige" Entkopplung der Elektromotoren 28a, 28b von den Radführungsgliedern 22a, 22b erreicht. Lediglich geringe, aufgrund des Lagerspiels mögliche Schwenkbewegungen der Radführungsglieder 22a, 22b um den hilfsrahmenseitigen Aufhängungspunkt werden auf die Elektromotoren 28a, 28b übertragen. Hierdurch entspricht die bewegte Masse der längenveränderlichen Radführungsglieder 22a, 22b im Wesentlichen der Masse der längenfesten Radführungsglieder der konventionellen Radaufhängung. Dies hat den Vorteil, dass die dynamischen Eigenschaften der Radaufhängung nicht spürbar verändert werden, bzw. keine Anpassung der sonstigen Radaufhängung erforderlich ist, um den Einfluss einer höheren Masse des Radführungsliedes auf die Dynamik der Radaufhängung zu kompensieren.

Die Elektromotoren 28a, 28b werden bei dieser Ausführungsform und bei den im Folgenden beschrieben Ausführungsformen der Erfindung über das Bordnetz des Kraftfahrzeugs mit Energie versorgt und durch ein Steuergerät 37 angesteuert. Durch in der Figur nicht dargestellte Sensoren im Bereich der Elektromotoren 28a, 28b werden die Winkelstellungen der Motorwellen oder die Anzahl der Umdrehungen der Motorantriebswellen erfasst und über jeweils eine Signalleitung an das Steuergerät 37 übermittelt. Aus der Winkelstellung der Motorwelle werden im Bereich des Steuergerätes 37 in Abhängigkeit von den relevanten Größen der Getriebe der Lenkvorrichtung und der Geometrie der Radaufhängung die aktuell an den Hinterrädern 21a, 21b vorliegenden Radeinschlagswinkel bestimmt. Der Wert der aktuell vorliegenden Radeinschlagswinkel kann dabei insbesondere einem Regelverfahren zugeführt werden, durch das vorgegebene Sollwerte für die Radeinschlagswinkel an den Hinterrädern 21a, 21b eingeregelt werden.

Die Ansteuerung erfolgt vorzugsweise anhand eines Regelverfahrens in Abhängigkeit von verschiedenen fahrdynamischen Größen, die mithilfe von Sensoren erfasst oder aus erfassten Größen berechnet werden. Insbesondere kann dabei die Sensorik eines ESP-Systems eingesetzt werden (ESP: Electronic Stability Program). Diese umfasst üblicherweise einen Lenkwinkelsensor zum Erfassen des Lenkwinkels, den der Fahrer mittels einer Lenkhandhabe an den lenkbaren Vorderrädern des Fahrzeugs eingestellt hat, einen Raddrehzahlsensor an jedem Rad des Fahrzeugs, einen Pedalwegsensor zum Erfassen der Stellung des Fahrpedals sowie einen Gierratensensor bzw. einen Sensorcluster, der einen Gierratensensor, einen Querbeschleunigungssensor und einen Längsbeschleunigungssensor enthält.

Diese Signale werden üblicherweise in einem ESP-Steuergerät empfangen und ausgewertet. Im Rahmen der Erfindung kann eine Schnittstelle zur Signalübertragung zwischen dem ESP-Steuergerät und dem Hinterachslenkungssteuergerät 37 vorgesehen sein. Die Signalübertragung kann dabei beispielsweise über einen Datenbus wie das üblicherweise in Kraftfahrzeugen eingesetzte CAN (Controller Area Network) erfolgen.

Die Schnittstelle kann zur Übertragung der Signale der ESP-Sensorik an das Hinterachslenkungssteuergerät 37 genutzt werden, welches in Abhängigkeit von den Sensorsignalen anhand eines Regelverfahrens Sollwertvorgaben für die Radeinschlagswinkel der Hinterräder 21a, 21b bzw. die Längen der längenveränderlichen Radführungsglieder 22a, 22b generiert. Gleichfalls kann es auch vorgesehen sein, dass diese Sollwertvorgaben in dem ESP-Steuergerät bestimmt und über die Schnittstelle an das Hinterachslenkungssteuergerät 37 übertragen werden, welches die Elektromotoren 28a, 28b dann entsprechend der Sollwertvorgaben ansteuert.

Grundsätzlich können die Hinterräder 21a, 21b gleichsinnig oder gegensinnig in Bezug auf die Lenkbewegung der Vorderräder eingelenkt werden. Durch ein gleichsinniges Einlenken der Hinterräder 21a, 21b und der Vorderräder verringert sich bei gleich bleibendem Lenkwinkel an den Vorderrädern der Kurvenradius, so dass eine Erhöhung der Agilität des Fahrzeugs erreicht werden kann. Werden die Hinterräder 21a, 21b in entgegengesetztem Drehsinn zu den Vorderrädern eingelenkt, verringert sich die Gierrate des Fahrzeugs, so dass das Fahrzeug in kritischen Fahrsituationen stabilisiert werden kann.

Dadurch, dass beiden längenveränderlichen Radführungsgliedern 22a, 22b jeweils ein Elektromotor 28a, 28b zugeordnet ist, ist es bei der in den Figuren 1 und 2 dargestellten Ausführungsform der Erfindung möglich, unterschiedliche Radeinschlagswinkel an beiden Hinterrädern 21a, 21b einzustellen.

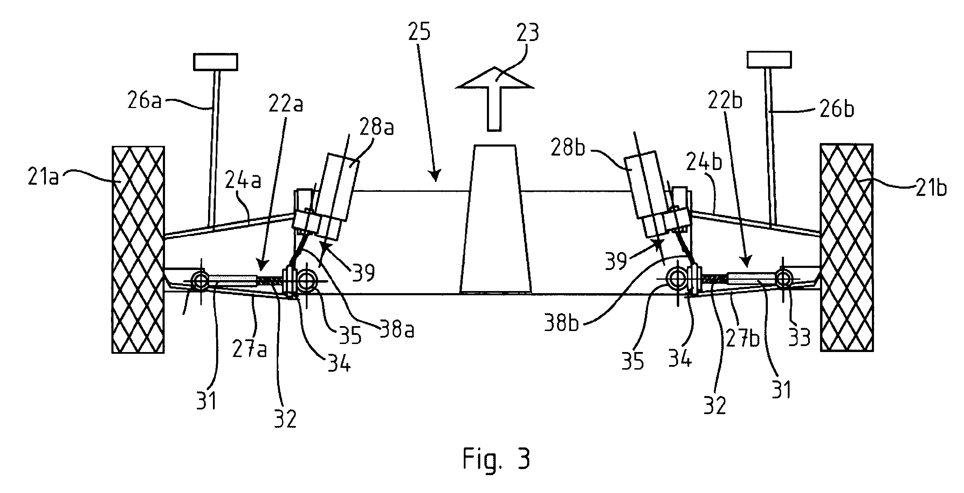

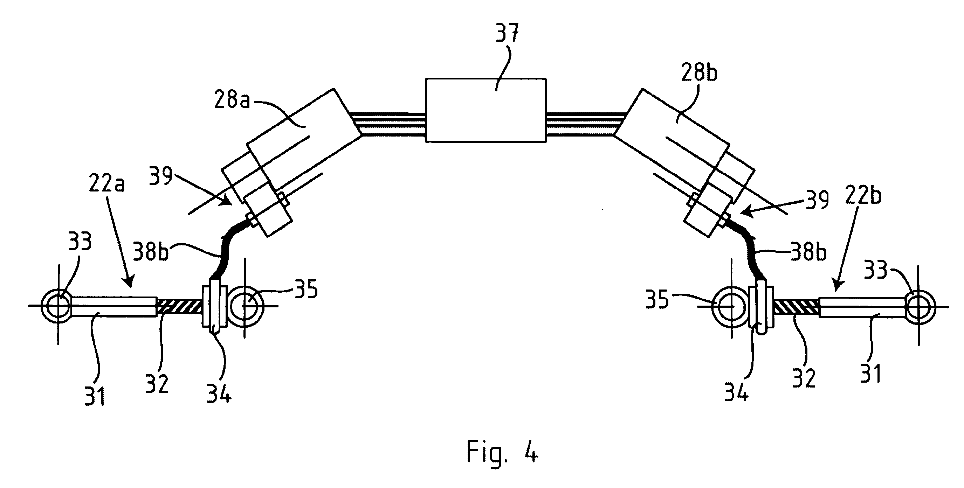

In den Figuren 3 und 4 ist eine weiteren Ausführungsform der Erfindung dargestellt, bei der es vorgesehen ist, die Elektromotoren 28a, 28b beabstandet von den längenverstellbaren Radführungsgliedern 22a, 22b an dem Fahrzeugaufbau bzw. dem Hinterachshilfsrahmen 25 anzuordnen. Der Antrieb der Schnecken der Schneckengetriebe 34 erfolgt dabei über Antriebswellen 38a, 38b, die flexibel ausgeführt sind. Mittels geeigneter Armaturen sind die Antriebswellen 38a, 38b einerseits mit der Schnecke des Schneckengetriebes 34 sowie andererseits mit einem Getriebe 39 verbunden. Über das Getriebe 39 wird die Rotationsbewegung einer Antriebswelle des zu dem Radführungsglied 22a, 22b gehörigen Elektromotors 28a, 28b auf die entsprechende Antriebswelle 38a bzw. 38b übertragen. Die Elektromotoren 28a, 28b sind fest mit dem Fahrzeugaufbau bzw. dem Hinterachshilfsrahmen 25 verbunden (siehe Figur 3). Das Getriebe 39 kann beispielsweise als Zahnradgetriebe oder als Riemengetriebe ausgeführt sein.

Der Antrieb der Schneckengetriebe 34 über die flexiblen Antriebswellen 38a, 38b erlaubt eine noch bessere Entkopplung der Elektromotoren 28a, 28b von den längenveränderlichen Radführungsgliedern 22a, 22b. Darüber hinaus können die Elektromotoren 28a, 28b aufgrund der Verwendung der flexiblen Antriebswellen 38a, 38b nahezu beliebig an einem geeigneten Einbauort an dem Hinterachshilfsrahmen 25 befestigt werden.

Als besonders vorteilhaft hat es sich erwiesen, flexible Kraftfahrzeug-Bremsschläuche als flexible Antriebswellen 38a, 38b einzusetzen. Vorzugsweise werden dabei mehrschichtige Bremsschläuche verwendet, die mehrere Schichten aus Gummi oder einem elastischen Kunststoff und aus einem Gewebe und/oder einem Drahtgeflecht aufweisen. Beispielsweise können die Bremsschläuche aus einer inneren Schicht aus Gummi oder Kunststoff, einer ersten Verstärkungsschicht aus geflochtenen Gewebefasern, einer weiteren Schicht aus Gummi oder Kunststoff, einer Schicht aus Metallgeflecht und einer äußeren abriebfesten Schicht aus Gummi oder Kunststoff aufgebaut sein. Derartige Bremsschläuche sind dazu in der Lage, das zur Längenverstellung der Radführungsglieder 22a, 22b notwendige Drehmoment, das beim Anlaufen der Elektromotoren 28a, 28b beispielsweise bis zu 10 Nm betragen kann, zu übertragen. Bei einem Einsatz im Bereich des Fahrzeugunterbodens bzw. des Fahrwerks haben sich Bremsschläuche insbesondere im Hinblick auf Robustheit gegenüber äußeren Einflüssen und Verschleiß bereits bestens bewährt. Er ist wartungsfrei, es ist keine Schmierung notwendig, die Antriebswelle friert nicht in einer Hülle bzw. einem Mantel fest und es treten keine Schleifgeräusche auf. Zudem werden derartige Bremsschläuche in großen Mengen hergestellt und sind daher kostengünstig erhältlich.

Die Ansteuerung der Elektromotoren 28 erfolgt bei dieser Ausführungsform in gleicher Weise, wie es im Zusammenhang mit der in den Figuren 1 und 2 dargestellten Ausführungsform beschrieben worden ist.

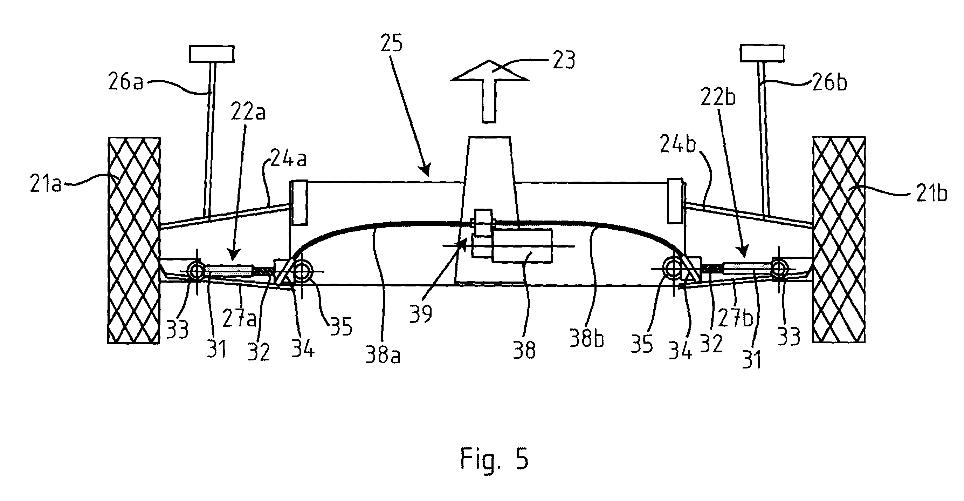

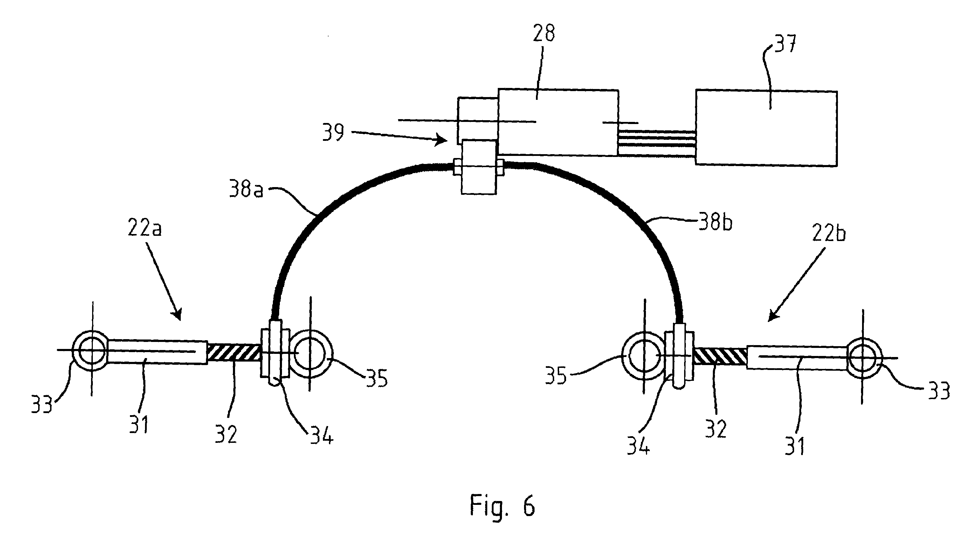

In den Figuren 5 und 6 ist eine Ausführungsform der Erfindung dargestellt, bei der ein einziger durch das Steuergerät 38 in der beschriebenen Weise angesteuerter Elektromotor 28 die Schneckengetriebe 34 beider längenverstellbarer Radführungsglieder 22a, 22b antreibt.

Bei dieser Ausführungsform sind eine flexible Antriebswelle 38a des dem linken Hinterrad 21a zugeordneten längenveränderlichen Radführungsgliedes 22a und eine flexible Antriebswelle 38b des dem rechten Hinterrad 21b zugeordneten längenveränderlichen Radführungsgliedes 22b mit dem von der Antriebswelle des Elektromotors 28 angetriebenen Getriebe 39 verbunden. Bei den Antriebswellen 38a, 38b handelt es sich vorzugsweise ebenfalls um Bremsschläuche.

Es kann vorgesehen sein, dass die beiden flexiblen Antriebswellen 38a, 38b Abschnitte einer einstückige flexiblen Welle sind, welche die Schneckengetriebe 34 der beiden längenverstellbaren Radführungsglieder 22a, 22b miteinander verbindet. Der Antrieb kann hier beispielsweise über ein Zahnrad erfolgen, das im Bereich des Getriebes 39 auf die Welle aufgesetzte ist. Gleichfalls kann es auch vorgesehen sein, dass die Antriebswelle zweistückig ausgebildet ist und die beiden Abschnitte 36a, 36b der Antriebswelle nicht direkt miteinander verbunden ist. In diesem Fall erfolgt der Antrieb über Armaturen, die im Bereich des Getriebes 39 an den Enden der Antriebswellen 38a, 38b montiert sind.

Die in den Figuren 5 und 6 dargestellte Ausführungsform der Erfindung hat den Vorteil, dass nur ein Elektromotor 29 benötigt wird und damit das Gewicht und die Größe des erforderlichen Einbauraums für die Lenkvorrichtung reduziert werden.

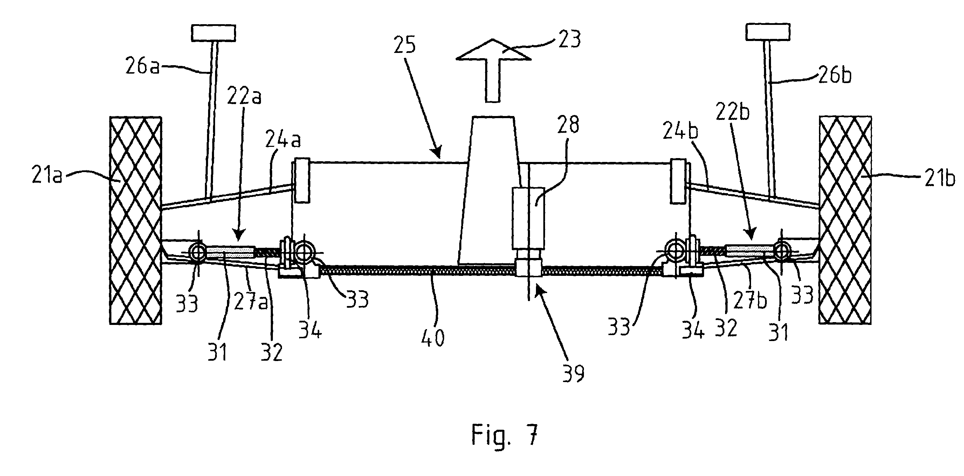

Bei der in Figur 7 dargestellten Ausführungsform der Erfindung erfolgt der Antrieb der Schneckengetriebe 34 der beiden längenveränderlichen Radführungsglieder 22a und 22b ebenfalls mittels eines einzigen Elektromotors 28. Der Antrieb ist bei dieser Ausführungsform jedoch als Riementrieb ausgebildet. Dabei weist das Getriebe 39 vorzugsweise ein Zahnrad auf, das in einen Zahnriemen 40 eingreift. Im Bereich des Getriebes 39 sind Führungselemente vorgesehen, die den Zahnriemen 40 in Kontakt mit dem Zahnrad halten. Im Bereich der Schneckengetriebe 34 greift der Zahnriemen 40 in jeweils ein Zahnrad ein, das antriebsmäßig mit der Schnecke des entsprechenden Schneckengetriebes 34 verbunden ist und diese antreibt, wobei der Zahnriemen im Bereich der Schneckengetriebe 34 vorzugsweise innerhalb der die Schneckengetriebe 34 beherbergenden Gehäuse geführt und durch Führungselemente in Kontakt mit den Zahnrädern gehalten wird. Anstelle eines Zahnriemenantriebs kann gleichfalls ein Keilriemenantrieb vorgesehen sein.

## Patentansprüche

1. Lenkvorrichtung zum Einstellen eines Radeinschlagswinkels wenigstens eines Rades eines Kraftfahrzeugs, insbesondere eines Hinterrades, umfassend wenigstens ein Radführungsglied (22a; 22b), über das ein Radträger des Rades mit einem Fahrzeugaufbau verbunden ist, wobei der Radträger um eine im Wesentlichen parallel zur Radebene verlaufende Drehachse schwenkbar ist und das Radführungsglied (22a; 22b) beabstandet von der Drehachse an einem Radträger angelenkt ist, und das Radführungsglied (22a; 22b)mittels eines Elektromotors (28; 28a; 28b) in seiner Länge verstellbar ist, wobei ein an dem Radführungsglied (22a; 22b) angeordnetes Getriebe (34) aufgrund einer Rotation einer Antriebswelle des Elektromotors (28; 28a; 28b) eine Längenänderung des Radführungsgliedes (22a; 22b) bewirkt, die zu einer Veränderung des Radeinschlagswinkels des Rades führt, und wobei der Elektromotor (28; 28a; 28b) an dem Fahrzeugaufbau (25) befestigt ist und eine Antriebswelle des Elektromotors (28; 28a; 28b) über ein Übertragungselement (36; 38a; 38b; 40) mit dem Getriebe (34) verbunden ist, **dadurch gekennzeichnet, dass** das Übertragungselement (36; 38a; 38b; 40) als eine flexible Antriebswelle (38a; 38b) ausgeführt ist und das Getriebe (34) ein Schneckengetriebe umfasst, wobei mittels des Übertragungselements (36; 38a; 38b; 40) eine Schnecke des Schneckengetriebes (34) antreibbar ist.

2. Lenkvorrichtung nach Anspruch 1,
**dadurch gekennzeichnet,**
**dass** der Elektromotor (28a; 28b) im Bereich eines Aufhängungspunktes des in seiner Länge verstellbaren Radführungsgliedes (22a; 22b) an dem Fahrzeugaufbau (25) befestigt ist.

3. Lenkvorrichtung nach Anspruch 2,
**dadurch gekennzeichnet,**
**dass** es sich bei dem Übertragungselement (36; 38a; 38b; 40) um ein Übertragungsgetriebe handelt, das antriebsmäßig mit der Antriebswelle des Elektromotors (28a; 28b) verbunden ist.

4. Lenkvorrichtung nach einem der vorangegangenen Ansprüche,
**dadurch gekennzeichnet,**
**dass** der Elektromotor (28; 28a; 28b) beabstandet von dem in seiner Länge verstellbaren Radführungsglied (22a; 22b) angeordnet ist.

5. Lenkvorrichtung nach Anspruch 1,
**dadurch gekennzeichnet,**
**dass** es sich bei der flexiblen Antriebswelle (38a; 38b) um einen Bremsschlauch handelt.

6. Lenkvorrichtung nach einem der vorangegangenen Ansprüche,
**dadurch gekennzeichnet,**
**dass** es sich bei dem Übertragungselement (36; 38a; 38b; 40) um einen Zahnriemen (40) oder einen Keilriemen handelt.

7. Lenkvorrichtung nach Anspruch 1,
**dadurch gekennzeichnet,**
**dass** das Schneckengetriebe (34) selbsthemmend ausgeführt ist.

8. Lenkvorrichtung nach einem der Ansprüche 1,
**dadurch gekennzeichnet,**
**dass** das Schneckengetriebe (34) am fahrzeugaufbauseitigen Ende des Radführungsgliedes (22a; 22b) angeordnet ist.

9. Lenkvorrichtung nach einem der vorangegangenen Ansprüche,
**dadurch gekennzeichnet,**
**dass** das Radführungsglied (22a; 22b) einen Gewindespindelabschnitt (32) und einen Mutterabschnitt (31) aufweist, wobei der Gewindespindelabschnitt (32) in den Mutterabschnitt (31) eingreift und eine Drehung des Gewindespindelabschnitts (32) eine Längenveränderung des Radführungsgliedes (22a; 22b) bewirkt.

10. Lenkvorrichtung nach Anspruch 1,
**dadurch gekennzeichnet,**
**dass** ein Schneckenrad des Schneckengetriebes (34) mit der Gewindespindelabschnitt (32) des Radführungsgliedes antriebsmäßig verbunden ist.

11. Kraftfahrzeug, umfassend ein linkes und ein rechtes Hinterrad,
**dadurch gekennzeichnet,**
**dass** jedem Hinterrad (21a; 21b) eine Lenkvorrichtung nach einem der vorangegangenen Ansprüche zugeordnet ist, wobei jeweils ein Elektromotor (28a; 28b) zur Verstellung der Länge der Radführungsglieder (22a, 22b) vorgesehen ist, der über ein Übertragungselement (36; 38a; 38b) mit dem Getriebe (34) verbunden ist.

12. Kraftfahrzeug, umfassend ein linkes und ein rechtes Hinterrad,
**dadurch gekennzeichnet,**
**dass** jedem Hinterrad eine Lenkvorrichtung nach einem der Ansprüche 1 bis 7 zugeordnet ist, wobei genau ein Elektromotor (28) zur Verstellung der Länge der Radführungsglieder (22a, 22b) vorgesehen ist, der über wenigstens ein Übertragungselement (38a; 38b; 40) mit den Getrieben (34) der Radführungsglieder (22a, 22b) verbunden ist.

## Claims

1. Steering device for adjusting a steer angle of at least one wheel of a motor vehicle, in particular a rear wheel, comprising at least one wheel-guiding member (22a; 22b) via which a wheel carrier of the wheel is connected to a vehicle body, wherein the wheel carrier is pivotable about an axis of rotation running substantially parallel to the wheel plane and the wheel-guiding member (22a; 22b) is coupled at a distance from the axis of rotation to a wheel carrier, and the length of the wheel-guiding member (22a; 22b) can be adjusted by means of an electric motor (28; 28a; 28b), wherein a gearing (34) arranged on the wheel-guiding member (22a; 22b) causes the length of the wheel-guiding member (22a; 22b) to change as a result of rotation of a drive shaft of the electric motor (28; 28a; 28b), said change in length resulting in a change in the steer angle of the wheel, and wherein the electric motor (28; 28a; 28b) is fastened to the vehicle body (25) and a drive shaft of the electric motor (28; 28a; 28b) is connected to the gearing (34) via a transmission element (36; 38a; 38b; 40), **characterized in that** the transmission element (36; 38a; 38b; 40) is designed as a flexible drive shaft (38a; 38b) and the gearing (34) comprises a worm gearing, a worm of the worm gearing (34) being drivable by means of the transmission element (36; 38a; 38b; 40).

2. Steering device according to Claim 1, **characterized in that** the electric motor (28a; 28b) is fastened to the vehicle body (25) in the region of a suspension point of the length-adjustable wheel-guiding member (22a; 22b).

3. Steering device according to Claim 2, **characterized in that** the transmission element (36; 38a; 38b; 40) is a transmission gearing which is connected in terms of drive to the drive shaft of the electric motor (28a; 28b).

4. Steering device according to one of the preceding claims, **characterized in that** the electric motor (28; 28a; 28b) is arranged at a distance from the length-adjustable wheel-guiding member (22a; 22b).

5. Steering device according to Claim 1, **characterized in that** the flexible drive shaft (38a; 38b) is a brake hose.

6. Steering device according to one of the preceding claims, **characterized in that** the transmission element (36; 38a; 38b; 40) is a toothed belt (40) or a V-belt.

7. Steering device according to Claim 1, **characterized in that** the worm gearing (34) is of self-locking design.

8. Steering device according to Claim 1, **characterized in that** the worm gearing (34) is arranged at that end of the wheel-guiding member (22a; 22b) which is on the vehicle-body side.

9. Steering device according to one of the preceding claims, **characterized in that** the wheel-guiding member (22a; 22b) has a threaded spindle portion (32) and a nut portion (31), the threaded spindle portion (32) engaging in the nut portion (31) and rotation of the threaded spindle portion (32) causing the length of the wheel-guiding member (22a; 22b) to change.

10. Steering device according to Claim 1, **characterized in that** a worm wheel of the worm gearing (34) is connected in terms of drive to the threaded spindle portion (32) of the wheel-guiding member.

11. Motor vehicle comprising a left and a right rear wheel, **characterized in that** each rear wheel (21a; 21b) is assigned a steering device according to one of the preceding claims, a respective electric motor (28a; 28b) being provided to adjust the length of the wheel-guiding members (22a, 22b), said electric motor being connected to the gearing (34) via a transmission element (36; 38a; 38b).

12. Motor vehicle comprising a left and a right rear wheel, **characterized in that** each rear wheel is assigned a steering device according to one of Claims 1 to 7, just one electric motor (28) being provided to adjust the length of the wheel-guiding members (22a; 22b), said electric motor being connected to the gearings (34) of the wheel-guiding members (22a; 22b) via at least one transmission element (38a; 38b; 40).

## Revendications

1. Dispositif de direction destiné à établir un angle de braquage sur au moins une roue d'un véhicule automobile, en particulier une roue arrière, et comprenant au moins un organe (22a; 22b) de guidage de roue par lequel un support de roue est relié au châssis du véhicule,
le support de roue pouvant pivoter autour d'un axe de rotation qui s'étend essentiellement en parallèle au plan de la roue et l'organe (22a; 22b) de guidage de roue étant articulé sur un support de roue à distance de l'axe de rotation,
la longueur de l'organe (22a; 22b) de guidage de roue pouvant être ajustée au moyen d'un moteur électrique (28; 28a; 28b),
une transmission (34) disposée sur l'organe (22a; 22b) de guidage de roue ayant pour effet de modifier la longueur de l'organe (22a; 22b) de guidage de roue par rotation de l'arbre d'entraînement du moteur électrique (28; 28a; 28b), ce qui entraîne une modification de l'angle de braquage de la roue,
le moteur électrique (28; 28a; 28b) étant fixé sur le châssis (25) du véhicule et l'arbre d'entraînement du moteur électrique (28; 28a; 28b) étant relié à la transmission (34) par un élément de transfert (36; 38a; 38b; 40),
**caractérisé en ce que**
l'élément de transfert (36; 38a; 38b; 40) est configuré comme arbre flexible d'entraînement (38a; 38b), la transmission (34) comprenant une transmission à vis, une vis de la transmission à vis (34) pouvant être entraînée au moyen de l'élément de transfert (36; 38a; 38b; 40).

2. Dispositif de direction selon la revendication 1, **caractérisé en ce que** le moteur électrique (28a; 28b) est fixé sur le châssis (25) du véhicule dans la zone du point de suspension de l'organe (22a; 22b) de guidage de roue ajustable en longueur.

3. Dispositif de direction selon la revendication 2, **caractérisé en ce que** l'élément de transfert (36; 38a; 38b; 40) est une transmission de transfert reliée à entraînement à l'arbre d'entraînement du moteur électrique (28a; 28b).

4. Dispositif de direction selon l'une des revendications précédentes, **caractérisé en ce que** le moteur électrique (28; 28a; 28b) est disposé à distance de l'organe (22a; 22b) de guidage de roue ajustable en longueur.

5. Dispositif de direction selon la revendication 1, **caractérisé en ce que** l'arbre flexible d'entraînement (38a; 38b) est un tube flexible de frein.

6. Dispositif de direction selon l'une des revendications précédentes, **caractérisé en ce que** l'élément de transfert (36; 38a; 38b; 40) est une courroie crantée (40) ou une courroie biseautée.

7. Dispositif de direction selon la revendication 1, **caractérisé en ce que** la transmission à vis (34) est autobloquante.

8. Dispositif de direction selon la revendication 1, **caractérisé en ce que** la transmission à vis (34) est disposée sur l'extrémité de l'organe (22a; 22b) de guidage de roue située du côté du châssis du véhicule.

9. Dispositif de direction selon l'une des revendications précédentes, **caractérisé en ce que** l'organe (22a; 22b) de guidage de roue présente une partie (32) en tige filetée et une partie (31) en écrou, la partie (32) en tige filetée engageant la partie (31) en écrou et une rotation de la partie (32) en tige filetée ayant pour effet une modification de la longueur de l'organe (22a; 22b) de guidage de roue.

10. Dispositif de direction selon la revendication 1, **caractérisé en ce qu'**une roue hélicoïdale de la transmission à vis (34) est reliée à entraînement à la partie (32) en tige filetée de l'organe de guidage de roue.

11. Véhicule automobile comprenant une roue arrière gauche et une roue arrière droite,
**caractérisé en ce que**
un dispositif de direction selon l'une des revendications précédentes est associé à chaque roue arrière (21a; 21b), un moteur électrique (28a; 28b) ajustant la longueur des organes (22a, 22b) de guidage de roue étant prévu et étant relié à la transmission (34) par l'intermédiaire d'un élément de transfert (36; 38a; 38b).

12. Véhicule automobile comprenant une roue arrière gauche et une roue arrière droite,
**caractérisé en ce que**
un dispositif de direction selon l'une des revendications 1 à 7 est associé à chaque roue arrière, un moteur électrique (28) ajustant la longueur des organes (22a, 22b) de guidage de roue étant prévu et étant relié par au moins un élément de transfert (38a; 38b; 40) aux transmissions (34) des organes (22a, 22b) de guidage de roue.
